# EUROPEAN PATENT APPLICATION

(11) **EP 4 589 966 A1**
(43) Date of publication of application: **23.07.2025**
(21) Application number: 23910065.4
(22) Date of filing: 11.12.2023
(51) Int. Cl.: H04N 21/44

(54) **VIDEO PROCESSING METHOD AND APPARATUS, AND DEVICE AND MEDIUM**

(30) Priority: 26.12.2022 CN 202211677133
(71) Applicant: Beijing Zitiao Network Technology Co., Ltd., Beijing 100190 (CN)
(72) Inventor: WU, Jinyong, Beijing 100028 (CN); YU, Jianli, Beijing 100028 (CN); WANG, Yifeng, Beijing 100028 (CN); CHEN, Hao, Beijing 100028 (CN); LIU, Jiyang, Beijing 100028 (CN); ZHUGE, Jingjing, Beijing 100028 (CN); ZHOU, Qiang, Beijing 100028 (CN)
(74) Representative: Williams, Michael David
(86) International application number: PCT/CN2023/137800
(87) International publication number: WO 2024/140135

(57) **Abstract**

The embodiments of the present disclosure relate to a video processing method and apparatus, and a device and a medium. The method comprises: acquiring a smearing area of a target image in a target video, wherein the smearing area is an area which is determined on the basis of performing a smearing operation on the target image by a user; inputting into a segmentation algorithm the target image and area information of the smearing area corresponding to the target image, so as to obtain a target area in the target image, which is output by the segmentation algorithm, wherein the target area includes an object area specified by the user, and the object area specified by the user is an area of a main body object to which the smearing area belongs or the smearing area; and on the basis of the target area in the target image, tracking a first image in the target video, so as to determine a target area in the first image, and/or on the basis of the target area in the target image, performing reverse tracking on a second image in the target video, so as to determine a target area in the second image.

## Description

### CROSS-REFERENCE TO RELATED APPLICATIONS

The present application claims the priority to the Chinese patent application No. 202211677133.3 entitled "VIDEO PROCESSING METHOD AND APPARATUS, AND DEVICE AND MEDIUM" filed on December 26, 2022, the disclosure of which is incorporated by reference herein in its entirety.

### TECHNICAL FIELD

The present disclosure relates to the technical field of video processing, and in particular, to a video processing method and apparatus, and a device and a medium.

### BACKGROUND

Existing multimedia clip software can provide a user with functions such as intelligent matting or animation special effects, and these functions can automatically identify system identifiable objects in an image, such as human, cat, dog, and further perform operations such as matting, adding a special effect, or the like on the basis of an identified object area. However, effects achievable by these functions completely depend on an algorithm adopted by the software itself, for example, if a human figure matting algorithm is adopted by the software itself, only all human figures in the image can be identified and extracted, and if a human face special effect algorithm is adopted by the software itself, only all human faces in the image can be identified and special effects are added thereto; the above manners are less flexible and are hard to meet the needs of the user well.

### SUMMARY

The present disclosure provides an image processing method and apparatus, and a device and a medium.

An embodiment of the present disclosure provides a video processing method, comprising: acquiring a smearing area of a target image in a target video, wherein the smearing area is an area determined on the basis of performing a smearing operation on the target image by a user; inputting, into a segmentation algorithm, the target image and area information of the smearing area corresponding to the target image, so as to obtain a target area in the target image, which is output by the segmentation algorithm, wherein the target area comprises an object area specified by the user, and the object area specified by the user is an area of a main body object to which the smearing area belongs or the smearing area; and on the basis of the target area in the target image, performing tracking on a first image in the target video so as to determine a target area in the first image, and/or, on the basis of the target area in the target image, performing reverse tracking on a second image in the target video so as to determine a target area in the second image, wherein the first image is a frame image located behind the target image in the target video, and the second image is a frame image located in front of the target image in the target video.

An embodiment of the present disclosure further provides a video processing apparatus, comprising: a smearing area acquisition module configured to acquire a smearing area of a target image in a target video, wherein the smearing area is an area determined on the basis of performing a smearing operation on the target image by a user; a first target area determination module configured to input, into a segmentation algorithm, the target image and area information of the smearing area corresponding to the target image, so as to obtain a target area in the target image, which is output by the segmentation algorithm, wherein the target area comprises an object area specified by the user, and the object area specified by the user is an area of a main body object to which the smearing area belongs or the smearing area; and a second target area determination module configured to, on the basis of the target area in the target image, perform tracking on a first image in the target video so as to determine a target area in the first image; and/or, on the basis of the target area in the target image, perform reverse tracking on a second image in the target video so as to determine a target area in the second image, wherein the first image is a frame image located behind the target image in the target video, and the second image is a frame image located in front of the target image in the target video.

An embodiment of the present disclosure further provides an electronic device, comprising: a processor; a memory configured to store instructions executable by the processor, wherein the processor is configured to read the executable instructions from the memory and execute the executable instructions to implement the video processing methods according to the embodiments of the present disclosure.

An embodiment of the present disclosure further provides a non-transitory computer-readable storage medium having stored thereon a computer program for performing the video processing methods according to the embodiments of the present disclosure.

It should be understood that the content described herein is not intended to identify key or critical features of the embodiments of the present disclosure, nor is it intended to limit the scope of the present disclosure. Other features of the present disclosure will become apparent from the following description.

### BRIEF DESCRIPTION OF THE DRAWINGS

The accompanying drawings herein, which are incorporated in and constitute a part of this specification, illustrate embodiments consistent with the present disclosure and, together with the description, serve to explain the principles of the present disclosure.

In order to more clearly illustrate technical solutions in the embodiments of the present disclosure or the related art, the drawings be used in the description of the embodiments or the related art will be briefly described below, and it is apparent that for those skilled in the art, other drawings can also be obtained according to these drawings without paying creative labor.
Fig. 1 is a schematic flow diagram of a video processing method according to an embodiment of the present disclosure;
Fig. 2 is a schematic diagram of a preset matting algorithm according to an embodiment of the present disclosure;
Fig. 3 is a schematic flow diagram of a matting process according to an embodiment of the present disclosure;
Fig. 4 is a schematic diagram of performance of a task according to an embodiment of the present disclosure;
Fig. 5 is a schematic flow diagram of performance of an interactive segmentation task according to an embodiment of the present disclosure;
Fig. 6 is a schematic flow diagram of conversion of brush data into a matting result according to an embodiment of the present disclosure;
Fig. 7 is a schematic flow diagram of performance of a tracking task according to an embodiment of the present disclosure;
Fig. 8 is a schematic structural diagram of a video processing apparatus according to an embodiment of the present disclosure; and
Fig. 9 is a schematic structural diagram of an electronic device according to an embodiment of the present disclosure.

### DETAILED DESCRIPTION

In order that the above objectives, features and advantages of the present disclosure may be more clearly understood, the solutions of the present disclosure will be further described below. It should be noted that, in the case of no conflict, the embodiments of the present disclosure and the features in the embodiments may be combined with each other.

In the following description, numerous specific details are set forth in order to provide a thorough understanding of the present disclosure, but the present disclosure may be implemented in other ways different from those described herein; and it is apparent that the embodiments in the description are only some of the embodiments of the present disclosure, rather than all of them.

The inventors have founded through research that, the existing intelligent matting function or animation special effect function or the like is less flexible; taking the intelligent matting function as an example below, assuming that a matting algorithm adopted by the system can only identify human figures, then the intelligent matting function can only identify human figures in a to-be-processed image, but cannot identify and extract another object type, for example, a user cannot extract a cat figure in the image through the matting function; assuming that a plurality of human figures exist in a to-be-processed image simultaneously, the existing matting function can extract the plurality of human figures simultaneously, but cannot extract only one of the images required by the user. To improve the above problems, the inventors provide a video processing method and apparatus, and a device and medium, which are described in detail below.

According to the technical solutions provided by the embodiments of the present disclosure, a user can flexibly specify a required target area (which can include a smearing area or an area of a main body object to which the smearing area belongs) in a target image in a video by means of smearing, and can conveniently and quickly determine a target area of another frame image in the video by means of tracking and/or reverse tracking on this basis, wherein the target areas determined as above can flexibly and conveniently meet personalized requirements of the user.

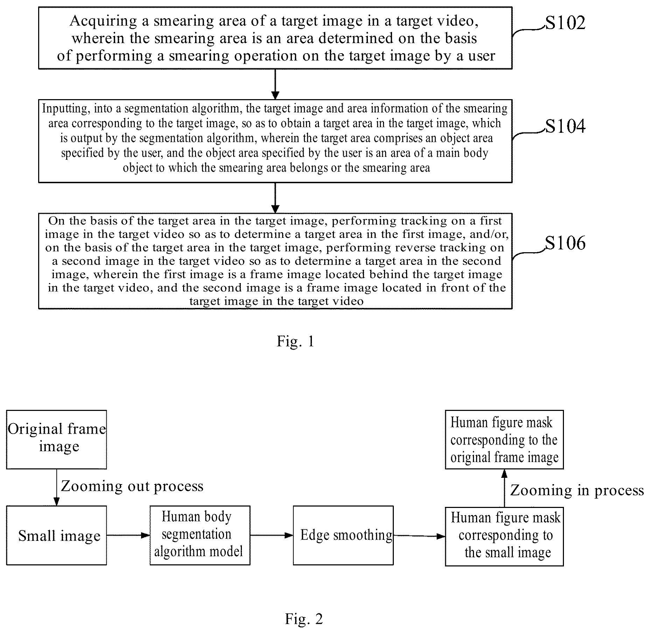

Fig. 1 is a schematic flow diagram of a video processing method according to an embodiment of the present disclosure, which may be executed by a video processing apparatus, wherein the apparatus may be implemented in software and/or hardware, and may be generally integrated in an electronic device, and the electronic device may be a user terminal such as a mobile phone, a computer, or the like, and as shown in Fig. 1, the method mainly comprises the following steps S102 to S106:
Step S102, acquiring a smearing area of a target image in a target video, wherein the smearing area is an area determined on the basis of performing a smearing operation on the target image by a user.

The target video is a to-be-processed video, video content and the like of the target video is not limited in the embodiments of the present disclosure, and the target image may be any frame image selected by the user from the target video, without limitations here. In some implementation examples, the smearing operation is an operation of smearing on the target image by using a virtual brush by the user. For example, the virtual brush is provided for the user in an interactive interface, after the user clicks on the virtual brush, he/she controls the virtual brush by means of, for example, finger sliding, mouse sliding, or the like, to form a smearing trajectory on the target image; a trajectory of finger sliding on the target image is the smearing trajectory of the virtual brush, and a thickness of the virtual brush can be set by the user. Correspondingly, the acquiring a smearing area of a target image comprises: acquiring a brush thickness of the virtual brush selected by the user and smearing trajectory information of smearing on the target frame image by using the virtual brush by the user; and determining the smearing area of the target image according to the brush thickness and the smearing trajectory information. In some specific implementation examples, the smearing area may be determined by means of, for example, feature point sampling, for example, a trajectory contour of the brush is determined according to the brush thickness and the smearing trajectory, and the smearing area is determined on the basis of the trajectory contour.

Step S104, inputting, into a segmentation algorithm, the target image and area information of the smearing area corresponding to the target image so as to obtain a target area in the target image, which is output by the segmentation algorithm, wherein the target area comprises an object area specified by the user, and the object area specified by the user is an area of a main body object to which the smearing area belongs or the smearing area. The role of the target area is not limited in the embodiment of the present disclosure, exemplarily, the target area may be used for a matting process, that is, the target area may be a to-be-extracted image area; and exemplarily, the target area may be used for a special effect process, and by taking an example that the target area is a human figure smeared by the user, the special effect may be specified special effect such as adding headwear to the human figure and changing a facial feature. The above is exemplary description and should not be considered as limitations. The segmentation algorithm may determine the to-be-extracted target area in the target image on the basis of the area information of the smearing area corresponding to the target image. The area information of the smearing area is used for identifying a position of the smearing area, exemplarily, the area information of the smearing area may be characterized in a form of a mask (i.e., mask image) of the smearing area; the mask of the smearing area has the same size as the target image, but pixels where the smearing area is located in the mask of the smearing area are non-0 (such as 1), while pixels in a background part outside the smearing area are all 0, so that a location of the smearing area in the image can be clearly identified.

In practical applications, the object area may be only the smearing area, or the area of the main body object to which the smearing area belongs, which may specifically depend on settings of the user, for example, if the brush selected by the user is of a different type, then the object area is determined differently. In some implementations, the object area specified by the user is the area of the main body object to which the smearing area belongs; the user smears a stroke on a cat body in the target image, that is, the smearing area is located in an area of the cat body, then the main body object to which the smearing area belongs is a cat. In addition, it should be noted that division of the main body object may be set according to requirements, for example, a complete individual can be defined as a main body object, for example, one cat or one tree is taken as a main body object; a complete local part can also be defined as a main body object, for example, a cat head or a trunk is taken as a main body object, or a cat ear or a leaf is taken as a main body object; granularity of the division of the main body object can be flexibly set according to requirements, without limitations here. It can be understood that the area of the main body object to which the smearing area belongs is greater than the smearing area, without the need of the user to perform complete smearing or contour delineation on the whole main body object to be extracted, but by simply smearing, for example, only simply drawing a line on the cat body, the segmentation algorithm can quickly determine that the to-be-extracted area is the whole cat, thereby improving the matting efficiency and user experience. In other implementations, the object area specified by the user is the smearing area, then it is indicated that only a portion that the user has smeared is extracted. The user can, according to the requirements, flexibly select the manner of determining the to-be-extracted target area on the basis of the smearing area, without limitations here.

Step S106, on the basis of the target area in the target image, performing tracking on a first image in the target video so as to determine a target area in the first image, and/or, on the basis of the target area in the target image, performing reverse tracking on a second image in the target video so as to determine a target area in the second image, wherein the first image is a frame image located behind the target image in the target video, and the second image is a frame image located in front of the target image in the target video. That is, it is possible to perform reverse tracking on the images in front of the target image, or perform tracking on the images behind the target image, so that on the basis of determining the target area of the target image, the target areas of the other frame images in the target video can be conveniently and quickly determined directly by means of tracking or reverse tracking, and the target areas of the other frame images may also be used for perform a matting process, etc., without limitations here.

According to the above technical solution provided in the embodiment of the present disclosure, a user can flexibly specify a required target area (which can include a smearing area, or an area of a main body object to which the smearing area belongs) in a target image in a video by means of smearing, and can conveniently and quickly determine the target areas of the other frame images in the video by means of tracking and/or reverse tracking on this basis, and the target areas determined as above can better meet personalized requirements of the user.

In addition, it should be noted that in the related art, the matting function needs a server for its implementation, and a user needs to upload an image to the server to implement the matting function, which not only has a certain information security risk, but also is less real time, inefficient matting, and requires high matting cost, as a result of time and flow consumption due to the need for image transmission and other interactive processes with the server. However, the above manner provided in the embodiment of the present disclosure can be executed by a user terminal, the selecting the target area by the user himself can be performed by the user terminal, that is, on the basis of a smearing area determined by a smearing operation of the user, the target area (including an object area specified by the user) the user desires to extract is determined by using a segmentation algorithm; that is to say, the user terminal can link the front-end interaction (such as the smearing operation of the user) and the background algorithm (such as the segmentation algorithm), so that a user-customized matting function can be reliably performed in the user terminal locally, not only without limitations to only extracting an object of a specified type in an image in the related art, so that the matting requirement of the user can be fully met, but also without the need to upload the image to the server for processing, so that the problems such as time consumption and flow consumption of interaction between the server and the mobile terminal can be avoided, information security can be better guaranteed, and real time of the processing can be effectively guaranteed, helping to improve matting efficiency and reduce matting cost.

Further, the method further comprises: acquiring a to-be-overlaid area corresponding to the target image, wherein the to-be-overlaid area corresponding to the target image is an area which needs to be acquired from the target image before the smearing operation. Exemplarily, assuming that the user has enabled a preset matting function (which may also be referred to as an intelligent matting function) in advance, the intelligent matting function being a function for extracting an area of a preset type object in the image by using a preset matting algorithm, and the preset type object being of an object type contained in training samples for the preset matting algorithm; for example, the preset matting algorithm is a human figure matting algorithm, which is obtained by training the training samples containing a human figure, then the intelligent matting function can automatically extract the human figure, and the to-be-overlaid area needs to include the human figure in the target image. In addition, the to-be-overlaid area may also include a customized object specified by the user on another image in front of the target image; for example, the target image belongs to an image in the target video, and the user sets on another image in the target video that a dog figure needs to be extracted, then the to-be-overlaid area corresponding to the target image may also include the dog figure. In addition, the to-be-overlaid area may also be an empty area; for example, it is not needed to extract another area from the target image before the smearing operation, then it can be considered that the to-be-overlaid area is empty, or area information of the to-be-overlaid area is empty data.

On this basis, the inputting, into a segmentation algorithm, the target image and area information of the smearing area corresponding to the target image comprises: inputting, into the segmentation algorithm, the target image, the area information of the smearing area corresponding to the target image, and the area information of the to-be-overlaid area, wherein the target area further comprises the to-be-overlaid area. That is, the segmentation algorithm may comprehensively determine the to-be-extracted target area by using the area information of the smearing area and the area information of the to-be-overlaid area. For example, the target area may include not only the object area determined on the basis of the smearing area, but also the to-be-overlaid area.

In some implementation examples, the acquiring a to-be-overlaid area corresponding to the target image may be implemented by referring to the following (1) and (2):
(1) in response to a preset matting function being enabled, an area of a preset type object in the target image is acquired on the basis of a preset matting algorithm, and the area of the preset type object is taken as the to-be-overlaid area, wherein the preset type object is of an object type contained in training samples for the preset matting algorithm. In the embodiment of the present disclosure, the preset type object is not limited, for example, it can be a human figure, and the intelligent matting function is a function of automatically extracting the human figure at this time. It should be noted that the user cannot control which preset type object the intelligent matting function specifically extracts, and the preset type object the intelligent matting function can extract is set by the background algorithm itself, so that the user can only select whether to enable the intelligent matting function.
(2) In response to the preset matting function being disabled or no preset type object existing in the target image, it is determined that the to-be-overlaid area corresponding to the target image is an empty area, which is an area not existing in the target image, and the to-be-overlaid area can be specifically characterized by meaningless data.

In some implementation examples, the segmentation algorithm determines the to-be-extracted target area in the target image according to the following steps a to b:
Step a, determining the object area specified by the user according to the area information of the smearing area.

If the smearing operation is an operation of smearing the target frame image by using a virtual brush by the user, on this basis, the above step a may be implemented by referring to the following steps: acquiring a brush type of the virtual brush selected by the user. In response to the brush type being a first type, it is determined that the object area specified by the user is the area of the main body object to which the smearing area belongs; and in response to the brush type being a second type, it is determined that the object area specified by the user is the smearing area. In practical applications, different types of virtual brushes can be provided for the user, for example, a brush of the first type is a quick brush, and the user only needs to simply smear on the object to be extracted, to determine that the main body object to which the smearing area belongs is to be extracted by the user. Exemplarily, the user only needs to simply draw a stroke on a cat figure to be extracted to determine that the object area specified by the user is the cat figure. However, a brush of the second type is a common brush, which indicates that only the smearing area of the user is extracted, and the smearing area is an area of a trajectory contour drawn by the user on the image, so that the object area specified by the user is only the area of the trajectory contour.

Step b, obtaining the to-be-extracted target area in the target image according to area information of the object area corresponding to the target image and the area information of the to-be-overlaid area corresponding to the target image.

In some specific implementation examples, the area information of the object area comprises a mask of the object area, and the area information of the to-be-overlaid area comprises a mask of the to-be-overlaid area. The mask may be identified by using different pixel values for different areas, exemplarily, the mask of the object area and the mask of the to-be-overlaid area both have the same size as the target image, but in the mask of the object area, the object area has pixel values of 1, and remaining background areas all have pixel values of 0, while in the mask of the to-be-overlaid area, the to-be-overlaid area has pixel values of 1, and remaining background areas all have pixel values of 0. The mask can clearly identify the area to be extracted, and can be fused with the target image subsequently to extract the object area and the to-be-overlaid area.

On this basis, the above step b can be implemented by referring to the following steps: merging the mask of the object area corresponding to the target image and the mask of the to-be-overlaid area corresponding to the target image, and on the basis of the merged mask, determining the to-be-extracted target area in the target image. That is, masks of all to-be-extracted areas are merged into one mask, and the merged mask can clearly show a target area to be extracted in the above manner of pixel identification, for example, an area with pixel values of 1 on the merged mask belongs to the target area, and by merging the masks, the direct use of the merged mask for fusion with the target image is also facilitated, conveniently and quickly extracting the target area from the target image.

In some implementation examples, the target image belongs to the target video, that is, the target image is a frame image in the target video; the embodiment of the present disclosure not only can determine the to-be-extracted target area in the target image so as to perform a matting process on the target image, but also can extract the target to be extracted by the user from the whole video; exemplarily, the above method provided in the embodiment of the present disclosure further comprises tracking and/or reverse tracking, which may be specifically executed by referring to the following (1) and/or (2):
(1) a specific implementation example of, on the basis of the target area in the target image, performing tracking on a first image in the target video (a frame image located behind the target image in the target video) so as to determine a target area in the first image, may be executed by referring to the following steps A1 to A3:
   Step A1, taking the frame images located behind the target image in the target video as the first image one-by-one in order from front to back until an end frame is reached. The end frame may be a last frame of the target video or a certain frame set by the user.
   Step A2, obtaining a to-be-overlaid area corresponding to the first image. The to-be-overlaid area corresponding to the first image is other areas to be extracted than the area of the main body object to which the smearing area of the target image belongs. Exemplarily, assuming that the user enables the preset matting function (taking intelligent matting of a human figure as an example) in advance, the to-be-overlaid area includes a human figure area in the first image. The understanding of the to-be-overlaid area corresponding to the first image is similar to that of the to-be-overlaid area corresponding to the target image, which will not be repeated here.
   Step A3, inputting, into a tracking algorithm, the first image and area information of the to-be-overlaid area corresponding to the first image, so as to determine the target area in the first image on the basis of the area information of the object area of the target image and the area information of the to-be-overlaid area corresponding to the first image by the tracking algorithm. In the tracking algorithm, an area of the main body object to which the smearing area belongs in the first image may be determined on the basis of the area information of the object area of the target image, and the area may be further merged with the to-be-overlaid area, thereby obtaining the to-be-extracted target area in the first image. Exemplarily, the to-be-overlaid area is a human figure, and the user performs the smearing operation on the target image to instruct extracting a cat figure (that is, the user customizes extracting the cat figure), then in the tracking algorithm, the cat figure in the first image may be determined by means of tracking, and in combination with the to-be-overlaid area, it may be determined that the to-be-extracted area in the first image is the human figure and the cat figure.
(2) A specific implementation example of, on the basis of the target area in the target image, performing reverse tracking on a second image in the target video so as to determine the target area in the second image, can be executed by referring to the following steps B1 to B3:
   Step B1, using the frame images located in front of the target image in the target video as the second image one-by-one in order from back to front.
   Step B2, acquiring a to-be-overlaid area corresponding to the second image;
   step B3, inputting, into a reverse tracking algorithm, the second image and area information of the to-be-overlaid area corresponding to the second image so as to determine the to-be-extracted target area in the second image on the basis of the area information of the object area of the target image and the area information of the to-be-overlaid area corresponding to the second image by the reverse tracking algorithm. The reverse tracking algorithm is similar to the tracking algorithm, with a difference that in the tracking algorithm, the frame images are processed in the order from front to back, while in the reverse tracking algorithm, the frame images are processed in the order from back to front. Exemplarily, assuming that the target video has 200 frames in total and the user performs the smearing operation on a 100-th frame (target image), in the tracking algorithm, the 100-th to 200-th frame images are processed in order from front to back, while in the reverse tracking algorithm, the 100-th to 1st frame images are processed in order from back to front.

For the specific implementation of the step of acquiring the to-be-extracted target area in the second image by the reverse tracking algorithm, reference may be made to the related content of the step of acquiring the to-be-extracted target area in the first image by the tracking algorithm, which will be not repeated here.

In practical applications, the above tracking algorithm and/or the reverse tracking algorithm can be flexibly selected according to requirements, for example, only the target areas corresponding to the frame images behind the target image in the target video or only the target areas corresponding to the frame images in front of the target image in the target video may be extracted, and the target areas in the frame images in the whole target video can also be all extracted, so that diversified requirements of the user are met.

In some implementation examples, a target area corresponding to any frame image in the target video comprises a to-be-overlaid area corresponding to the frame image and an object area corresponding to the frame image; the object area corresponding to the frame image is an area of the main body object to which the smearing area belongs in the frame image. The any frame image may be, for example, the first image, the second image, or the target image described above. In practical applications, for the frame image, segmentation of the object area (such as a cat figure) specified by the user and segmentation of another area such as a human figure or the like to be extracted by the preset matting algorithm can be simultaneously performed, and in a specific implementation, an area to be segmented previously may be overlaid when customized segmentation is performed, and a mask where the cat figure and the human figure are simultaneously identified can be subsequently output, so that the cat figure and the human figure can be simultaneously extracted on the basis of the mask. On this basis, area information of the to-be-overlaid area contained in the target area corresponding to any frame image in the target video is obtained on the basis of the following steps 1 to 4:
Step 1, for any frame image in the target video, in response to the preset matting function being enabled, determining whether the area information of the to-be-overlaid area corresponding to the frame image is successfully read.
Step 2, if the area information is not read, inputting the frame image into a preset matting algorithm so as to acquire area information of a preset type object corresponding to the frame image by the preset matting algorithm. The preset type object is of an object type contained in training samples for the preset matting algorithm, and the preset matting function is a function for extracting an area of the preset type object in the image by the preset matting algorithm.

For ease of understanding, the exemplary description is as follows: in practical applications, it is assumed that the user performs customized matting on the basis of enabling the preset matting function, and the enabled preset matting function (such as a human figure matting algorithm) is to automatically extract a human figure in a frame image of a video by using the preset matting algorithm, that is, the to-be-overlaid area contains the human figure. For a certain frame image, if the preset matting algorithm has acted on the frame image, area information (such as human figure information) of a to-be-overlaid area corresponding to the frame image can be directly read, and if the preset matting algorithm has not acted on the frame image, for example, the user suddenly drags it from a 110-th frame to a 180-th frame, and at this time, the preset matting algorithm has not acted on the 180-th frame in time, then for the 180-th frame, the to-be-overlaid area corresponding to the frame image has not been read, and the 180-th frame image can be processed by the preset matting algorithm, thereby acquiring human figure information corresponding to the 180-th frame image.

Further, an embodiment of the present disclosure further provides a schematic principle diagram of a preset matting algorithm as shown in Fig. 2, in which by taking an example that the preset matting algorithm is a human figure matting algorithm, an original frame image is proportionally zoomed out to obtain a small image, exemplarily, a length of short sides of the original frame image can be controlled to be equally proportionally zoomed out, thereby obtaining a small image, then the small image is input to a human body segmentation algorithm model, and an edge smoothing operation is performed to obtain a human figure mask corresponding to the small image, and then the human figure mask is zoomed in to obtain a human figure mask corresponding to the original frame image, that is, the human figure mask has the same size as the original frame image, with pixel values of non-0 (such as 1) in a human figure area and pixel values of 0 in a non-human figure area. In this way, the human figure area can be clearly identified from the frame image.

Step 3, taking, as the area information of the to-be-overlaid area corresponding to the frame image, the read area information of the to-be-overlaid area corresponding to the frame image or the area information of the preset type object corresponding to the frame image acquired by the preset matting algorithm.

Step 4, in response to the preset matting function being disabled or no preset type object existing in the frame image, constructing empty data and taking the empty data as the area information of the to-be-overlaid area corresponding to the frame image. If the user does not enable the preset matting function, but completely performs customized matting, or a human figure to be extracted by the preset matting function does not exist in the frame image, empty data in the same size as the frame image can be created, specifically, the empty data may be a mask of the to-be-overlaid area, where all pixel values are uniformly the same special numerical value without substantial meaning, and it can also be understood that no to-be-overlaid area exists in the frame image. The purpose of taking the empty data as the area information of the to-be-overlaid area is that, an interface can be reserved for subsequent upgrade of the algorithm, such as it is possible to support overlaid use of remaining various set matting areas other than the preset matting function.

In other implementation examples, a target area corresponding to any frame image in the target video only comprises an object area corresponding to the frame image, wherein the object area corresponding to the frame image is an area of the main body object to which the smearing area belongs in the frame image. That is, customized segmentation may be performed only for the frame image to segment the object area specified by the user, when the object area specified by the user is segmented by using a segmentation algorithm, another area such as the human figure to be extracted by the preset matting algorithm cannot be segmented, and the result output by the segmentation algorithm is separate, for example, a customized object area (such as the above cat figure) is segmented by using a customized matting algorithm, an area of a preset type object (such as the above human figure) is segmented by using a preset matting algorithm, and subsequently, when there is a need of matting subsequently, the customized object area may be merged with the area of the preset type object, for example, a cat figure mask and a human figure mask can be separately obtained, then the cat figure mask and the human figure mask are merged, and then the image is processed by using the merged mask, so as to extract a cat figure and a human figure. On this basis, the above method further comprises the following steps 1) and 2):
step 1), in response to the preset matting function being enabled, inputting each frame image in the target video into a preset matting algorithm, respectively, so as to determine an area of a preset type object in the each frame image by the preset matting algorithm;
step 2), in response to performing a matting process, merging a mask of the target area and a mask of the area of the preset type object which correspond to the each frame image, and performing the matting process on the basis of the merged mask corresponding to the each frame image.

The customized matting and the intelligent matting (i.e., the preset matting function described above) can be performed separately, and are subsequently merged as needed. In practical applications, a required processing mode can be flexibly selected according to the requirements, and the customized matting and the intelligent matting can be performed simultaneously or separately, without limitations here.

To sum up, in practical applications, in a matting process on any frame image in a target video, it is possible to simultaneously output all areas to be extracted, which can also include an area to be extracted previously in addition to an object area customized by a user; and it is also possible to only output the object area customized by the user, but not extract the area to be extracted previously any longer, or additionally and independently extract the area to be extracted previously. Exemplarily, assuming that a target video has 200 frames in total, a user enables an intelligent matting function at a 1st frame, and the preset matting function is used for automatically matting a human figure; and the user instructs, by a smearing operation at a 100-th frame, that a cat figure is to be extracted, then for the frame image, the human figure and the cat figure can be extracted simultaneously, or extracted separately and then merged subsequently. In addition, the overlaying process may not be performed, for example, for images of the 100-th to 200-th frames, only matting of the cat figure is performed but matting of the human figure is not performed.

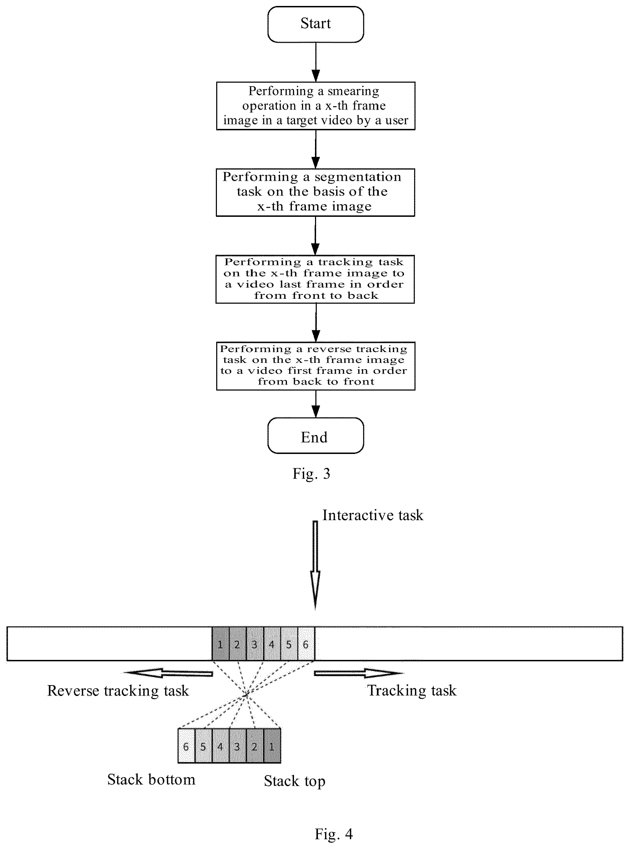

For ease of understanding, a specific implementation example of application of the above manner provided in the embodiment of the present disclosure is given below, in which the description is made by taking an example that matting is performed on a whole video, and for the overall process, reference may made to a schematic flow diagram of matting shown in Fig. 3, where a user performs a smearing operation in a x-th frame image in a target video, the x-th frame image being the above target image, then a segmentation task may be executed on the basis of the x-th frame image, and then a tracking task may be performed on images behind the x-th frame image and a reverse tracking task may be performed on images in front of the x-th frame image. Fig. 3 is the exemplary description only, and should not be considered as limitations, for example, in practical applications, only one of the tracking task or the reverse tracking task may be performed, and for another example, end frames may be set for the tracking task and the reverse tracking task, respectively, wherein the end frame may not be limited to a video last frame or video first frame. For ease of understanding, reference may also be made to a schematic diagram of performance of a task shown in Fig. 4, which briefly illustrates an performance node of an interactive task (i.e., performing a segmentation task for a smearing operation of a user, which may also be referred to as an interactive segmentation task), as well as frame image processing directions of a reverse tracking task and a tracking task; as shown in Fig. 4, the reverse tracking task is processing from back to front, and the tracking task is processing from front to back. Reference may be made to the above related content, which will be not repeated here.

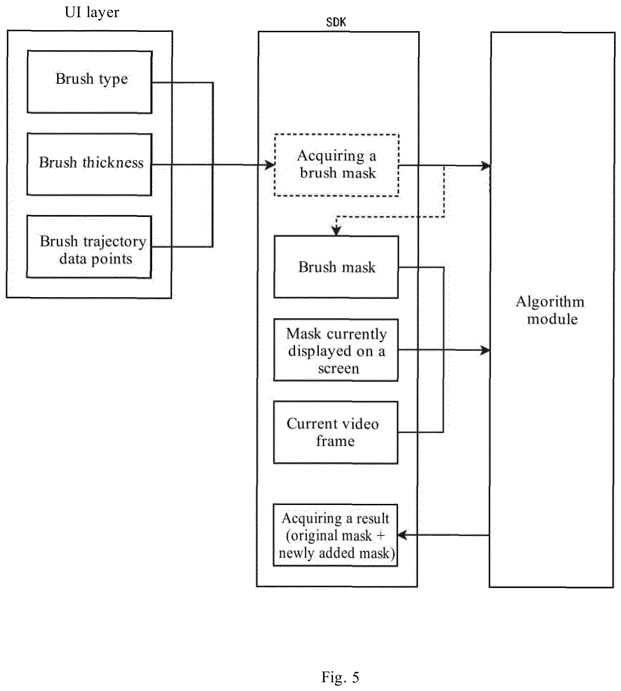

The following description will be specifically made for the interactive segmentation task and the tracking task/reverse tracking task:
For a performance of the interactive segmentation task, reference may be made to Fig. 5, where an SDK (Software Development Kit) may, through a UI layer (also referred to as an APP layer), acquire a brush type, a brush thickness, and brush trajectory data points, then obtain a brush mask (corresponding to the above smearing area), and input the acquired brush mask, a mask currently displayed on a screen (corresponding to the above to-be-overlaid area), and a current video frame (such as the above target image) to an algorithm module, and acquire a result (an original mask + a newly added mask) through a segmentation algorithm in the algorithm module. The above masks all represent masks, and respective areas are marked by, for example, pixel values of 0 or 1, wherein the original mask corresponds to an area to be extracted before the smearing operation, the newly added mask corresponds to an object area specified by a user by the smearing operation, i.e., the matting result of the frame image can simultaneously contain a customized matting area of the user and a to-be-overlaid area to be extracted before the user performs customized matting. It should be noted that the UI layer, the SDK, and the algorithm module described above are all provided in a user terminal, and specifically, the UI layer, the SDK, and the algorithm module described above may all belong to a client provided on the user terminal.

In addition, in practical applications, the brush type, the brush thickness, and the brush trajectory data points (corresponding to the above smearing trajectory information) may be converted into the brush mask through an interface provided by a preset rendering module. The rendering module can also perform fusion on the video frame and the obtained mask to remove a background and reserve a main body area (such as the human figure and the cat figure) corresponding to the mask, thereby obtaining the matting effect.

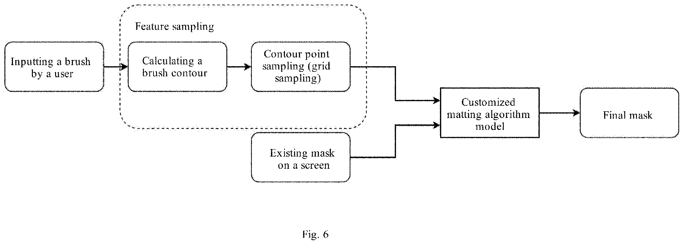

It can be understood that in the interactive segmentation task, there is a need to determine a used-customized mask on the basis of the brush mask, the brush mask corresponding to the brush data, the used-customized mask corresponding to the object area specified by the user, and an embodiment of the present disclosure provides a specific implementation example of converting brush data into a matting result; referring to Fig. 6, feature sampling can be performed on the basis of inputting a brush by a user, specifically, a brush contour can be calculated according to brush information such as a brush thickness and brush trajectory data points, and then contour point sampling can be performed, which can be specifically implemented by means of grid sampling, so that a to-be-extracted area is described on the basis of sampling points, and subsequently the sampling points and an existing mask (such as an area to be extracted from the image before a current brush trajectory, which corresponds to the above to-be-overlaid area) can be sent to a customized matting algorithm model, so that a final mask is obtained. In practical applications, the customized matting algorithm model can analyze a main body object covering all the sampling points according to the sampling points, and can determine the final mask on the basis of the existing mask. For example, union processing is performed on the customized mask corresponding to the brush and the existing mask to obtain the final mask. In some specific implementation examples, if the area where the user smears in the image by using the current brush (corresponding to the customized mask) and the existing to-be-extracted area (corresponding to the existing mask) have a common main body and the two areas are relatively close, a union area corresponding to the customized mask and the existing mask may be taken as a common main body area; and for example, if there has been already a cat head mask and the user smears a stroke on the cat body, it is considered that the union is the entire cat. However, if an area where the user smears in the image by using the current brush and the existing to-be-extracted area do not have a common main body, a union area corresponding to the customized mask and the existing mask is merely a simple combination of the two areas.

In addition, if the brush type is the above first type (i.e., the quick brush), when the customized mask is determined on the basis of the brush mask, the customized mask can be determined according to the thickness of the brush of the user and a length of the trajectory, that is, the area of the main body object to which the smearing area obtained by the user by performing the smearing operation by the brush belongs is determined, exemplarily, when the brush adopted by the user is thin and the length of the trajectory is short, sampling points are concentrated, and a main body object expected for matting is small, for example, only a cat head is extracted; and when the brush adopted by the user is thick and the length of the trajectory is long, sampling points are sparse, and a main body object expected for matting is large, for example, a whole cat is extracted. The above is only the exemplary description and should not be considered as limitations.

By performing the interactive segmentation task, the interactive segmentation result can be obtained, which can also be represented by the mask only, for example, the interactive segmentation result includes the user-customized mask. On this basis, the tracking task and/or reverse tracking task may be performed. The following description will be specifically made by taking the tracking task as an example.

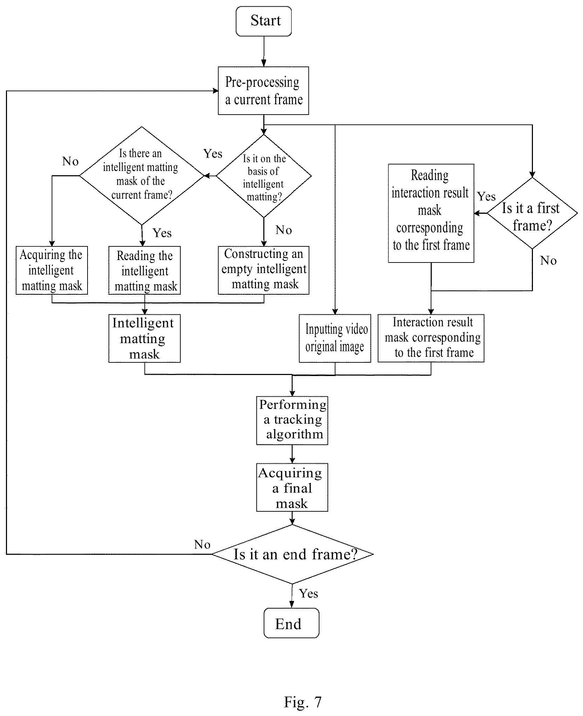

For a performance process of the tracking task, reference may be made to Fig. 7, where preprocessing may be made on a current frame first, the preprocessing operation including, but not limited to, decoding, resizing, format converting, etc., for example, a frame image in a video can be resized to a specified size, and a format of the image is converted to a format that can be processed by an algorithm module, etc. After the preprocessing, it can be determined whether the current frame is on the basis of intelligent matting, i.e., whether the current frame needs the intelligent matting; in other words, it is determined whether the user performs customized matting on the basis of the intelligent matting function being enabled. If it is not on the basis of the intelligent matting (i.e., the user completely performs customized matting), an empty intelligent matting mask can be constructed, which corresponds to the above empty area or empty data, exemplarily, a size of the empty intelligent matting mask is consistent with that of the frame image, but all pixels uniformly have a special numerical value, such as 1. If it is on the basis of the intelligent matting, it is indicated that the user performs customized matting on the basis that the intelligent matting function is enabled, it can be determined whether there is an intelligent matting mask of the current frame at this time, if there is the intelligent matting mask, the intelligent matting mask is directly read, that is, the intelligent matting mask can be successfully read. If there is no intelligent matting mask, the intelligent matting mask is acquired, for example, the current frame is input to an algorithm (the above preset matting algorithm) used by the intelligent matting function, the intelligent matting mask is obtained by the preset matting algorithm, and the intelligent matting mask can represent the above area information of the to-be-overlaid area. In this way, the intelligent matting mask can be obtained, wherein the intelligent matting mask may be obtained by the preset matting algorithm, and may also be empty data. Then, the intelligent matting mask, the video original image (i.e., the current frame), and an interaction result mask corresponding to a first frame are input to the tracking algorithm together, so as to obtain a final mask of the current frame by the tracking algorithm. It should be noted that the interaction result mask corresponding to the first frame in Fig. 7 is the above customized mask of the user, which may represent the area information of the object area specified by the user. In addition, the first frame in Fig. 7 is not a video first frame, but is the first frame for the tracking algorithm, such as a target image on which the user performs a smearing operation. When the tracking algorithm is executed for the current frame, it may be first determined whether the current frame is the first frame, if it is the first frame, the interaction result mask corresponding to the first frame is read, and if it is not the first frame, the interaction result mask corresponding to the first frame may be directly obtained. In practical applications, if the current frame is the first frame, input parameters of the tracking algorithm are: the interaction result mask corresponding to the first frame, the current frame image, and the intelligent matting mask, so that the tracking algorithm performs target tracking on subsequent frame images on the basis of the parameters such as the interaction result mask corresponding to the first frame and the like; and if the current frame is not the first frame, input parameters of the tracking algorithm may be: the current frame image and the intelligent matting mask.

The final mask (corresponding to the above to-be-extracted target area) of the current frame is obtained on the basis of the intelligent matting mask and the interaction result mask corresponding to the first frame by the tracking algorithm, wherein the final mask may contain the intelligent matting mask and the customized mask of the user, and then it is further determined whether the current frame is an end frame, wherein the end frame can be a video last frame or a frame image set by the user, and if it is the end frame, the process ends; if it is not the end frame, a next frame image is acquired in order for processing, and the process shown in Fig. 7 is executed for each frame image until it ends.

An execution process of the reverse tracking algorithm is similar to that of the tracking algorithm, which will not be repeated here.

To sum up, according to the video processing method provided in the embodiment of the present disclosure, a manner of selecting a matting area by the user himself is provided, which can be implemented by a user terminal, so that on the basis of a smearing area determined by a smearing operation of the user, a target area (including an object area specified by the user) to be extracted by the user can be determined by using a segmentation algorithm, that is, the user terminal can link the front-end interaction (such as the smearing operation of the user) with the background algorithm (such as the segmentation algorithm, the tracking algorithm, and the preset matting algorithm), so that a used-customized matting function can be reliably implemented on the user terminal locally; in addition, customized matting on the basis of intelligent matting function (i.e., the preset matting function) by the user is also enabled, and on the basis of a tracking algorithm/reverse tracking algorithm, matting of the user-customized target from the entire video is enabled. In practical applications, the user terminal can be provided with an SDK, through which the above method logic is executed, so that the link between the front-end interaction and the background algorithm can be efficiently and reliably realized, to achieve the effect of customized matting and/or intelligent matting.

In addition, the embodiment of the present disclosure is not required to be limited to only extracting an object of a specified type in an image in the related art, so that the matting requirement of the user can be fully met, and is not required to upload the image to a server for processing, so that the problems such as time consumption and flow consumption of interaction between the server and the mobile terminal can be avoided, information security can be better guaranteed, and real time of the processing can be effectively guaranteed, helping to improve matting efficiency and reduce matting cost.

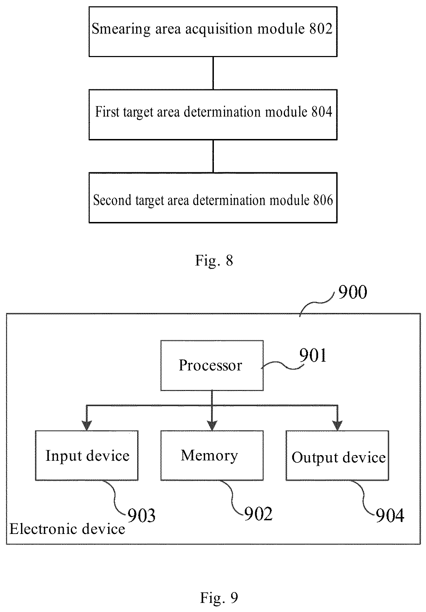

Corresponding to the foregoing image processing method, Fig. 8 is a schematic structural diagram of a video processing apparatus according to an embodiment of the present disclosure, and the apparatus may be implemented by software and/or hardware, and may be generally integrated in an electronic device, which may be a user terminal such as a mobile phone and a computer. As shown in Fig. 8, the apparatus comprises:
a smearing area acquisition module 802 configured to acquire a smearing area of a target image in a target video, wherein the smearing area is an area determined on the basis of performing a smearing operation on the target image by a user;
a first target area determination module 804 configured to input, into a segmentation algorithm, the target image and area information of the smearing area corresponding to the target image, so as to obtain a target area in the target image, which is output by the segmentation algorithm, wherein the target area comprises an object area specified by the user, and the object area specified by the user is an area of a main body object to which the smearing area belongs or the smearing area; and
a second target area determination module 806 configured to, on the basis of the target area in the target image, perform tracking on a first image in the target video so as to determine a target area in the first image; and/or, on the basis of the target area in the target image, perform reverse tracking on a second image in the target video so as to determine a target area in the second image, wherein the first image is a frame image located behind the target image in the target video, and the second image is a frame image located in front of the target image in the target video.

According to the technical solution provided in the embodiment of the present disclosure, the user can flexibly specify the required target area (which may contain the smearing area or the area of the main body object to which the smearing area belongs) in the target image in the video by means of smearing, and can conveniently and quickly determine the target areas of the other frame images in the video by means of tracking and/or reverse tracking on this basis, so that the target area determined in the above manner can better meet personalized requirements of the user.

In addition, it should be noted that in the related art, each matting function needs a server for its implementation, and a user needs to upload an image to the server to implement the matting function, which not only has a certain information security risk, but also is less real time, inefficient matting, and requires high matting cost, as a result of time and flow consumption due to the need for image transmission and other interactive processes with the server. However, the above manner provided in the embodiment of the present disclosure can be executed by a user terminal, the selecting the target area by the user himself can be performed by the user terminal, and on the basis of a smearing area determined by a smearing operation of the user, the target area (including an object area specified by the user) the user desires to extract is determined by using a segmentation algorithm, that is, the user terminal can link the front-end interaction (such as the smearing operation of the user) and the background algorithm (such as the segmentation algorithm), so that a user-customized matting function can be reliably performed in the user terminal locally, not only without limitations to only matting an object of a specified type in an image in the related art, so that the matting requirement of the user can be fully met, but also without the need to upload the image to the server for processing, so that the problems such as time consumption and flow consumption of interaction between the server and the mobile terminal can be avoided, information security can be better guaranteed, and real time of the processing can be effectively guaranteed, helping to improve matting efficiency and reduce matting cost.

In some implementations, the apparatus further comprises: a to-be-overlaid area acquisition module configured to acquire a to-be-overlaid area corresponding to the target image, wherein the to-be-overlaid area corresponding to the target image is an area to be acquired from the target image before the smearing operation. The first target area determination module 804 is specifically configured to: input, into the segmentation algorithm, the target image, the area information of the smearing area corresponding to the target image, and area information of the to-be-overlaid area, wherein the target area further comprises the to-be-overlaid area.

In some implementations, the to-be-overlaid area acquisition module is specifically configured to, in response to a preset matting function being enabled, acquire an area of a preset type object in the target image on the basis of a preset matting algorithm, and take the area of the preset type object as the to-be-overlaid area, wherein the preset type object is of an object type contained in training samples for the preset matting algorithm; and in response to the preset matting function being disabled or no preset type object existing in the target image, determine that the to-be-overlaid area corresponding to the target image is an empty area.

In some implementations, the apparatus further comprises a segmentation algorithm module configured to determine the target area in the target image by: determining the object area specified by the user according to the area information of the smearing area; and obtaining the target area in the target image according to area information of the object area corresponding to the target image and the area information of the to-be-overlaid area corresponding to the target image.

In some implementations, the smearing area acquisition module 802 is specifically configured to: acquire a brush type of the virtual brush selected by the user; in response to the brush type being a first type, determine that the object area specified by the user is the area of the main body object to which the smearing area belongs; and in response to the brush type being a second type, determine that the object area specified by the user is the smearing area.

In some implementations, the area information of the object area comprises a mask of the object area, and the area information of the to-be-overlaid area comprises a mask of the to-be-overlaid area; and the segmentation algorithm module is specifically configured to: merge the mask of the object area corresponding to the target image and the mask of the to-be-overlaid area corresponding to the target image, and determine the target area in the target image on the basis of the merged mask.

In some implementations, the smearing operation is an operation of smearing on the target image by using a virtual brush by the user; and the smearing area acquisition module 802 is specifically configured to acquire a brush thickness of the virtual brush selected by the user and smearing trajectory information of smearing on the target frame image by using the virtual brush by the user; and determine the smearing area of the target image according to the brush thickness and the smearing trajectory information.

In some implementations, the second target area determination module 806 is specifically configured to: take the frame images located behind the target image in the target video as the first image one-by-one in order from front to back; acquire a to-be-overlaid area corresponding to the first image; and input, into a tracking algorithm, the first image and area information of the to-be-overlaid area corresponding to the first image so as to determine the target area in the first image on the basis of the area information of the object area of the target image and the area information of the to-be-overlaid area corresponding to the first image by the tracking algorithm.

In some implementations, the second target area determination module 806 is specifically configured to: take the frame images located in front of the target image in the target video as the second image one-by-one in order from back to front; acquire a to-be-overlaid area corresponding to the second image; and input, into a reverse tracking algorithm, the second image and area information of the to-be-overlaid area corresponding to the second image so as to determine the target area in the second image on the basis of the area information of the object area of the target image and the area information of the to-be-overlaid area corresponding to the second image by the reverse tracking algorithm.

In some implementations, a target area corresponding to any frame image in the target video comprises a to-be-overlaid area corresponding to the frame image and an object area corresponding to the frame image, wherein the object area corresponding to the frame image is an area of the main body object to which the smearing area belongs in the frame image.

In some implementations, area information of the to-be-overlaid area comprised in the target area corresponding to any frame image in the target video is obtained on the basis of:
for any frame image in the target video, in response to a preset matting function being enabled, determining whether the area information of the to-be-overlaid area corresponding to the frame image is successfully read;
if the area information is not read, inputting the frame image into the preset matting algorithm so as to acquire area information of a preset type object corresponding to the frame image by the preset matting algorithm, wherein the preset type object is of an object type contained in training samples for the preset matting algorithm;
taking, as the area information of the to-be-overlaid area corresponding to the frame image, the read area information of the to-be-overlaid area corresponding to the frame image or the area information of the preset type object corresponding to the frame image acquired by the preset matting algorithm; and
in response to the preset matting function being disabled or no preset type object existing in the frame image, constructing empty data and taking the empty data as the area information of the to-be-overlaid area corresponding to the frame image.

In some implementations, a target area corresponding to any frame image in the target video only comprises an object area corresponding to the frame image, wherein the object area corresponding to the frame image is an area of the main body object to which the smearing area belongs in the frame image; and
the apparatus further comprises a matting module configured to, in response to a preset matting function being enabled, input each frame image in the target video into a preset matting algorithm, respectively, so as to determine an area of a preset type object in the each frame image by the preset matting algorithm, wherein the preset type object is of an object type contained in training samples for the preset matting algorithm; and in response to performing a matting process, merge a mask of the target area and a mask of the area of the preset type object which correspond to the each frame image, and perform the matting process on the basis of the merged mask corresponding to the each frame image.

The video processing apparatus provided in the embodiment of the present disclosure can execute the video processing method provided in any embodiment of the present disclosure, and has corresponding functional modules and beneficial effects of the execution of the method.

It can be clearly understood by those skilled in the art that, for convenience and simplicity of the description, for the specific working process of the apparatus embodiment described above, reference may be made to the corresponding process in the method embodiment, which will not be repeated here.

An embodiment of the present disclosure further provides an electronic device, comprising: a processor; a memory configured to store instructions executable by the processor, wherein the processor is configured to read the executable instructions from the memory and execute the executable instructions to implement any of the above video processing methods.

Fig. 9 is a schematic structural diagram of an electronic device according to an embodiment of the present disclosure. As shown in Fig. 9, the electronic device 900 comprises one or more processors 901 and a memory 902.

The processor 901 may be a central processing unit (CPU) or another form of processing unit having data processing capabilities and/or instruction execution capabilities, and may control other components in the electronic device 900 to perform desired functions.

The memory 902 may include one or more computer program products that may include various forms of computer-readable storage mediums, such as a volatile memory and/or non-volatile memory. The volatile memory may include, for example, a random access memory (RAM), and/or cache, and the like. The non-volatile memory may include, for example, a read-only memory (ROM), hard disk, flash memory, etc. On the computer-readable storage medium, one or more computer program instructions may be stored, which may be executed by the processor 901 to implement the video processing methods of the embodiments of the present disclosure described above and/or other desired functions. Various contents such as an input signal, a signal component, a noise component, etc. may also be stored in the computer-readable storage medium.

In one example, the electronic device 900 may further comprise: an input device 903 and an output device 904, which are interconnected via a bus system and/or another form of connection mechanism (not shown).

In addition, the input device 903 may also include, for example, a keyboard, a mouse, and the like.

The output device 904 may output, to the outside, various information, including the determined distance information, direction information, and the like. The output device 904 may include, for example, a display, a speaker, a printer, and a communication network and a remote output device connected therewith, and the like.

Of course, for simplicity, only some of the components related to the present disclosure in the electronic device 900 are shown in Fig. 9, and components such as a bus, input/output interface, etc. are omitted. In addition, the electronic device 900 may further include any other suitable components according to specific applications.

In addition to the above method and apparatus, an embodiment of the present disclosure may also be a computer program product comprising computer program instructions which, when executed by a processor, cause the processor to perform the video processing methods according to the embodiments of the present disclosure.

For the computer program product, program codes for executing the operations of the embodiments of the present disclosure may be written in any combination of one or more programming languages, including an object-oriented programming language such as Java and C++, or a conventional procedural programming language such as "C" language or similar programming languages. The program codes may be executed entirely on a user's computing device, partly on a user's device, as a stand-alone software package, partly on a user's computing device and partly on a remote computing device, or entirely on a remote computing device or server.

In addition, an embodiment of the present disclosure may also be a computer-readable storage medium having stored thereon computer program instructions which, when executed by a processor, cause the processor to perform the video processing methods according to the embodiments of the present disclosure.

For the computer-readable storage medium, any combination of one or more readable mediums may be adopted. The readable medium may be a readable signal medium or a readable storage medium. The readable storage medium may include, for example, but is not limited to, an electronic, magnetic, optical, electromagnetic, infrared, or semiconductor system, apparatus, or device, or a combination of any of the foregoing. More specific examples (a non-exhaustive list) of the readable storage medium include: an electrical connection having one or more wires, a portable diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

An embodiment of the present disclosure further provides a computer program product, comprising a computer program/instructions which, when executed by a processor, implement the video processing methods in the embodiments of the present disclosure.

It should be noted that, relational terms such as "first" and "second", herein, are only used for distinguishing one entity or operation from another entity or operation without necessarily requiring or implying any such actual relation or order between these entities or operations. Moreover, the term "comprise", "include", "contain", or any other variation thereof, is intended to encompass a non-exclusive inclusion, such that a process, method, article, or device comprising a list of elements not only includes those elements but also includes other elements not expressly listed, or also includes elements inherent to such a process, method, article, or device. Without more limitations, an element defined by a statement "comprising a ... " does not exclude the presence of another identical element in a process, method, article, or device that includes the element.

The above is only the specific implementations of the present disclosure, which enable those skilled in the art to understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to these embodiments described herein, but conform to the widest scope consistent with the principles and novel features disclosed herein.

## Claims

1. A video processing method, comprising:
acquiring a smearing area of a target image in a target video, wherein the smearing area is an area determined on the basis of performing a smearing operation on the target image by a user;
inputting, into a segmentation algorithm, the target image and area information of the smearing area corresponding to the target image, so as to obtain a target area in the target image, which is output by the segmentation algorithm, wherein the target area comprises an object area specified by the user, and the object area specified by the user is an area of a main body object to which the smearing area belongs or the smearing area; and
on the basis of the target area in the target image, performing tracking on a first image in the target video so as to determine a target area in the first image, and/or, on the basis of the target area in the target image, performing reverse tracking on a second image in the target video so as to determine a target area in the second image, wherein the first image is a frame image located behind the target image in the target video, and the second image is a frame image located in front of the target image in the target video.

2. The method according to claim 1, wherein the method further comprises:
acquiring a to-be-overlaid area corresponding to the target image, wherein the to-be-overlaid area corresponding to the target image is an area to be acquired from the target image before the smearing operation; and
the inputting, into a segmentation algorithm, the target image and area information of the smearing area corresponding to the target image comprises:
inputting, into the segmentation algorithm, the target image, the area information of the smearing area corresponding to the target image, and area information of the to-be-overlaid area, wherein the target area further comprises the to-be-overlaid area.

3. The method according to claim 2, wherein the acquiring a to-be-overlaid area corresponding to the target image comprises:
in response to a preset matting function being enabled, acquiring an area of a preset type object in the target image on the basis of a preset matting algorithm, and taking the area of the preset type object as the to-be-overlaid area, wherein the preset type object is of an object type contained in training samples for the preset matting algorithm; and
in response to the preset matting function being disabled or no preset type object existing in the target image, determining that the to-be-overlaid area corresponding to the target image is an empty area.

4. The method according to claim 2, wherein the segmentation algorithm determines the target area in the target image by:
determining the object area specified by the user according to the area information of the smearing area; and
obtaining the target area in the target image according to area information of the object area corresponding to the target image and the area information of the to-be-overlaid area corresponding to the target image.

5. The method according to claim 4, wherein the smearing operation is an operation of smearing on the target image by using a virtual brush by the user, and the determining the object area specified by the user according to the area information of the smearing area comprises:
acquiring a brush type of the virtual brush selected by the user;
in response to the brush type being a first type, determining that the object area specified by the user is the area of the main body object to which the smearing area belongs; and
in response to the brush type being a second type, determining that the object area specified by the user is the smearing area.

6. The method according to claim 4, wherein the area information of the object area comprises a mask of the object area, and the area information of the to-be-overlaid area comprises a mask of the to-be-overlaid area; and
the obtaining the target area in the target image according to area information of the object area corresponding to the target image and the area information of the to-be-overlaid area corresponding to the target image comprises:
merging the mask of the object area corresponding to the target image and the mask of the to-be-overlaid area corresponding to the target image, and determining the target area in the target image on the basis of the merged mask.

7. The method according to claim 1, wherein the smearing operation is an operation of smearing on the target image by using a virtual brush by the user; and
the acquiring a smearing area of a target image in a target video comprises:
acquiring a brush thickness of the virtual brush selected by the user and smearing trajectory information of smearing on the target image in the target video by using the virtual brush by the user; and
determining the smearing area of the target image according to the brush thickness and the smearing trajectory information.

8. The method according to claim 1, wherein the, on the basis of the target area in the target image, performing tracking on a first image in the target video so as to determine a target area in the first image comprises:
taking the frame images located behind the target image in the target video as the first image one-by-one in order from front to back;
acquiring a to-be-overlaid area corresponding to the first image; and
inputting, into a tracking algorithm, the first image and area information of the to-be-overlaid area corresponding to the first image so as to determine the target area in the first image on the basis of the area information of the object area of the target image and the area information of the to-be-overlaid area corresponding to the first image by the tracking algorithm.

9. The method according to claim 1, wherein the, on the basis of the target area in the target image, performing reverse tracking on a second image of the target video so as to determine a target area in the second image comprises:
taking the frame images located in front of the target image in the target video as the second image one-by-one in order from back to front;
acquiring a to-be-overlaid area corresponding to the second image; and
inputting, into a reverse tracking algorithm, the second image and area information of the to-be-overlaid area corresponding to the second image so as to determine the target area in the second image on the basis of the area information of the object area of the target image and the area information of the to-be-overlaid area corresponding to the second image by the reverse tracking algorithm.

10. The method according to claim 1, wherein a target area corresponding to any frame image in the target video comprises a to-be-overlaid area corresponding to the frame image and an object area corresponding to the frame image, wherein the object area corresponding to the frame image is an area of the main body object to which the smearing area belongs in the frame image.

11. The method according to claim 10, wherein area information of the to-be-overlaid area comprised in the target area corresponding to any frame image in the target video is obtained on the basis of:
for any frame image in the target video, in response to a preset matting function being enabled, determining whether the area information of the to-be-overlaid area corresponding to the frame image is successfully read;
if the area information is not read, inputting the frame image into a preset matting algorithm so as to acquire area information of a preset type object corresponding to the frame image by the preset matting algorithm, wherein the preset type object is of an object type contained in training samples for the preset matting algorithm;
taking, as the area information of the to-be-overlaid area corresponding to the frame image, the read area information of the to-be-overlaid area corresponding to the frame image or the area information of the preset type object corresponding to the frame image acquired by the preset matting algorithm; and
in response to the preset matting function being disabled or no preset type object existing in the frame image, constructing empty data and taking the empty data as the area information of the to-be-overlaid area corresponding to the frame image.

12. The method according to claim 1, wherein a target area corresponding to any frame image in the target video only comprises an object area corresponding to the frame image, wherein the object area corresponding to the frame image is an area of the main body object to which the smearing area belongs in the frame image; and
the method further comprises:
in response to a preset matting function being enabled, inputting each frame image in the target video into a preset matting algorithm, respectively, so as to determine an area of a preset type object in the each frame image by the preset matting algorithm, wherein the preset type object is of an object type contained in training samples for the preset matting algorithm; and
in response to performing a matting process, merging a mask of the target area and a mask of the area of the preset type object which correspond to the each frame image, and performing the matting process on the basis of the merged mask corresponding to the each frame image.

13. A video processing apparatus, comprising:
a smearing area acquisition module configured to acquire a smearing area of a target image in a target video, wherein the smearing area is an area determined on the basis of performing a smearing operation on the target image by a user;
a first target area determination module configured to input, into a segmentation algorithm, the target image and area information of the smearing area corresponding to the target image, so as to obtain a target area in the target image, which is output by the segmentation algorithm, wherein the target area comprises an object area specified by the user, and the object area specified by the user is an area of a main body object to which the smearing area belongs or the smearing area; and
a second target area determination module configured to, on the basis of the target area in the target image, perform tracking on a first image in the target video so as to determine a target area in the first image; and/or, on the basis of the target area in the target image, perform reverse tracking on a second image in the target video so as to determine a target area in the second image, wherein the first image is a frame image located behind the target image in the target video, and the second image is a frame image located in front of the target image in the target video.

14. An electronic device, comprising:
a processor; and
a memory configured to store instructions executable by the processor,
wherein the processor is configured to read the executable instructions from the memory and execute the executable instructions to implement the video processing method according to any of claims 1 to 12.

15. A non-transitory computer-readable storage medium having stored thereon a computer program for performing the video processing method according to any of claims 1 to 12.
